(19) Europäisches Patentamt

European Patent Office

Office européen des brevets

(11) EP 1 415 701 A2

(12) EUROPEAN PATENT APPLICATION

(43) Date of publication:
06.05.2004 Bulletin 2004/19

(51) Int Cl.⁷: B01D 53/88, B01D 53/94

(21) Application number: 03024764.7

(22) Date of filing: 29.10.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 30.10.2002 JP 2002316360

(71) Applicant: TOYOTA JIDOSHA KABUSHIKI
KAISHA
Aichi-ken 471-8571 (JP)

(72) Inventor: Tamura, Nakaba
Toyota-shi, Aichi, 471-8571 (JP)

(74) Representative:
Leson, Thomas Johannes Alois, Dipl.-Ing.
Tiedtke-Bühling-Kinne & Partner GbR,
TBK-Patent,
Bavariaring 4
80336 München (DE)

(54) **Support for an exhaust gas purification catalyst and production method**

(57)     A metal oxide is synthesized in the pores of a porous catalyst base material by impregnating a raw material solution for synthesis of that metal oxide into those pores. At that time, mesh-like cracks are formed in the metal oxide support layer coated onto the inner surfaces of the pores by adjusting the solid portion concentration in the raw material solution for synthesizing the metal oxide to a suitable value. In addition, fine pores are formed in the metal oxide support layer obtained after firing by containing a polymer and so forth in the raw material solution for synthesizing the metal oxide. The presence of these mesh-like cracks and/or fine pores in the metal oxide support layer allow the obtaining of effects such as greater ease of diffusion of exhaust gas into this support layer.

Fig.1

EP 1 415 701 A2

**Description**

BACKGROUND OF THE INVENTION

1. Field of the Invention

The present invention relates to a support for an exhaust gas purification catalyst for purifying components contained in exhaust gas discharged from an internal combustion engine.

2. Description of the Related Art

Various exhaust gas purification catalysts have been proposed for purifying components such as nitrogen oxide, carbon monoxide and hydrocarbons contained in the exhaust gas discharged from automobile engines and other internal combustion engines. A typical example of this type of exhaust gas purification catalyst involves an exhaust gas purification catalyst composed by coating a catalyst support selected from metal oxides such as γ-alumina and/or cordierite onto the surface of an exhaust gas flow path of a catalyst base material such as a cordierite honeycomb base material having a large number of cells, and loading a metal catalyst selected from, for example, platinum (Pt), palladium (Pd) and rhodium (Rd), onto this support (refer to, for example, Japanese Unexamined Patent Publication No. 6-279027).

Here, it is preferable to increase the surface area where the exhaust gas purification catalyst contacts the exhaust gas as much as possible in order to purify the exhaust gas. The inventors of the present invention found that an exhaust gas purification catalyst, in which a metal having an exhaust gas purification function is loaded onto an exhaust gas purification catalyst support obtained by coating a catalyst support in the form of a metal oxide within the pores of a honeycomb base material, facilitates easier distribution and diffusion of exhaust gas, has higher contact efficiency with exhaust gas, and has superior exhaust gas purification performance and durability than exhaust gas purification catalysts in which a metal oxide is coated onto the surface of the cell inner walls of a honeycomb base material, and a metal is loaded onto that metal oxide.

The aforementioned coating of metal oxide into the pores of a honeycomb base material can be carried out by crushing the metal oxide into a fine powder, and impregnating a slurry containing this fine powder into the pores of the honeycomb base material followed by drying and firing. However, in the case of coating a metal oxide into the pores of a honeycomb base material according to this method, as the powder aggregated in the aforementioned slurry containing the fine powder, it was difficult to form a thin, homogeneous coated layer on the surface inside the pores of the honeycomb base material. Moreover, as metal oxide was unable to be coated homogeneously onto the inner surfaces of all the pores of the honeycomb base material, some of the pores of the honeycomb base material were blocked by metal oxide powder, thereby inhibiting the diffusion of exhaust gas, while, as a result of the entrances to the pores being blocked, there was the additional disadvantage of metal oxide was not coated onto the surfaces of the pores farther inside.

Moreover, in a method in which a slurry containing a metal oxide powder is impregnated into the pores of a honeycomb base material, there was also the disadvantage of requiring an additional step for crushing the metal oxide and adjusting the particle size in order to prepare fine particles of metal oxide to be coated onto the honeycomb base material.

SUMMARY OF THE INVENTION

Namely, the present invention relates to a support for an exhaust gas purification catalyst comprising a metal oxide coated onto the inner surface of the pores of a porous base material for an exhaust gas purification catalyst without blocking said pores, and provides a support for an exhaust gas purification catalyst wherein an exhaust gas purification catalyst, which is obtained by loading a metal having exhaust gas purification activity on the catalyst support, demonstrates superior exhaust gas purification performance without the coated metal oxide support layer inhibiting diffusion of exhaust gas.

A first aspect of the support for an exhaust gas purification catalyst of the present invention has a metal oxide support layer coated onto the inner surface of the pores of a porous catalyst base material, and the surface of the metal oxide support layer has mesh-like cracks.

In addition, one production method of the aforementioned support for an exhaust gas purification catalyst of the present invention is comprised of impregnating a solution of an acidic metal salt inside the pores of a porous catalyst base material followed by reacting it with an alkaline solution and firing to form a metal oxide support layer.

In addition, one production method of the aforementioned support for an exhaust gas purification catalyst of the present invention comprises impregnating a sol solution, which is obtained by hydrolyzing and partially condensing a metal alkoxide, into the pores of a porous catalyst base material, followed by firing to form a metal oxide support layer.

In addition, one production method of the aforementioned support for an exhaust gas purification catalyst of the present invention comprises impregnating a solution of an acidic metal salt and a solution obtained by hydrolyzing and partially condensing a metal alkoxide into the pores of a porous catalyst base material followed by firing to form a metal oxide support layer.

Moreover, in each of the production methods of the aforementioned support for an exhaust gas purification catalyst of the present invention, the solution impregnated into the pores of the porous catalyst base material preferably has a solid portion concentration of 10-40 wt%.

In addition, a second support for an exhaust gas purification catalyst of the present invention has a metal oxide support layer coated onto the surface inside the pores of a porous catalyst base material, and the metal oxide support layer has an average pore diameter of 10 nm or more.

In addition, a third support for an exhaust gas purification catalyst of the present invention has a metal oxide support layer coated on the surface inside the pores of a porous catalyst base material, the metal oxide support layer has an average pore diameter of 10 nm or more, and the surface of the metal oxide support layer has mesh-like cracks.

Moreover, one production method of the aforementioned second or third support for an exhaust gas purification catalyst comprises impregnating a solution of an acidic metal salt, and a solution containing one or more types selected from the group consisting of polymer that dissolves in that solution, polymer powder and surfactant, into the pores of a porous catalyst base material, followed by reacting with an alkaline solution and firing to form a metal oxide support layer.

Moreover, one production method of the aforementioned second or third support for an exhaust gas purification catalyst comprises impregnating a sol solution obtained by hydrolyzing and partially condensing a metal alkoxide, and a solution containing one or more types selected from the group consisting of polymer that dissolves in that solution, polymer powder and surfactant, into the pores of a porous catalyst base material followed by firing to form a metal oxide support layer.

Moreover, one production method of the aforementioned second or third support for an exhaust gas purification catalyst comprises impregnating a mixed solution of a solution of an acid metal salt and a sol solution obtained by hydrolyzing and partially condensing a metal alkoxide, and a mixed solution containing one or more types selected from the group consisting of polymer that dissolves in that solution, polymer powder and surfactant, into the pores of a porous catalyst base material followed by firing to form a metal oxide support layer.

Moreover, in a production method of the aforementioned second or third support for an exhaust gas purification catalyst, the solution impregnated into the pores of the porous catalyst base material preferably has a solid portion concentration of 10-40 wt%.

BRIEF DESCRIPTION OF THE DRAWINGS

Fig. 1 is an electron micrograph of a portion of the cross-section of a support for an exhaust gas purification catalyst in which ceria and zirconia undergo phase separation in a metal oxide support layer as a result of not applying ultrasonic vibrations when a solution containing cerium nitrate and zirconia sol is impregnated into the pores of a porous catalyst base material and 1 M aqueous ammonia is additionally impregnated to cause a co-precipitation reaction.

Fig. 2 is an electron micrograph of a portion of the cross-section of catalyst (I).

Fig. 3 is an electron micrograph of a portion of the cross-section of catalyst (II).

Fig. 4 is an enlarged electron micrograph of a portion of the cross-section of catalyst (II).

DESCRIPTION OF THE PREFERRED EMBODIMENTS

The present invention was completed as a result of finding that, instead of a method in which a slurry containing a powder obtained by a crushing a catalyst support in the form of a metal oxide is impregnated into the pores of a porous catalyst base material for an exhaust purification catalyst, and a coating layer of metal oxide is formed within those pores, by impregnating a solution or slurry containing a metal salt and so forth serving as the raw material for synthesizing a metal oxide into the pores of a catalyst support for an exhaust gas purification catalyst followed by carrying out a reaction for forming metal oxide within the pores, a metal oxide support layer can be formed that is coated extremely homogeneously on the surface inside the pores of a catalyst base material for an exhaust gas purification catalyst.

In addition, by making the solid portion concentration of the solution or slurry containing a metal salt and so forth serving as the raw material for synthesizing the aforementioned catalyst support in the form of a metal oxide 10-40 wt%, it was found that mesh-like cracks can be made to occur in the surface of the metal oxide support layer formed on aforementioned pore inner surfaces, and these cracks serve to make the distribution and diffusion of exhaust gas satisfactory within the exhaust gas purification catalyst support, thereby leading to completion of the present invention.

Moreover, it was found that, by impregnating into the pores of an exhaust gas purification catalyst base material a solution or slurry obtained by adding one or more types selected from the group consisting of polymer, which is soluble in a solution or slurry containing a metal salt to serve as the raw material for synthesizing a catalyst support in the form of a metal oxide, polymer powder and surfactant, to this solution or slurry, and heating when forming a metal oxide support layer by synthesizing metal oxide within the pores, the metal oxide support layer can be made to be porous and have pores having an average pore diameter of 10 nm or more, thereby allowing the obtaining of satisfactory distribution and diffusion of exhaust gas within the exhaust gas purification catalyst support, while also being able to increase the contact area between the exhaust gas purification catalyst support and the exhaust gas, thereby leading to completion of the present invention.

Moreover, as an exhaust gas purification catalyst, which is obtained by loading a metal and so forth having the ability to purify exhaust gas onto the catalyst support of the present invention capable of facilitating easy distribution and diffusion of exhaust gas and having a large contact area with the exhaust gas, actually demonstrates superior exhaust gas purification performance, the catalyst support of the present invention is extremely useful as a support for an exhaust gas purification catalyst.

The exhaust gas purification catalyst support of the present invention is composed by containing a porous catalyst base material, and a metal oxide support layer formed by coating a catalyst support in the form of a metal oxide onto the inner surfaces of the pores of this base material.

The porous catalyst base material is able to use a known porous base material used for exhaust gas purification catalysts, and the use of, for example, a honeycomb base material, comprised of a ceramic material having heat resistance such as cordierite, alumina, zirconia or silicon nitride having a large number of fine pores within the base material, is preferable, while a cordierite honeycomb, having superior heat resistance and low coefficient of thermal expansion, is particularly preferable. This honeycomb base material preferably has a large number of cells that are open on both ends, and although there are no particular restrictions on the cell density of the honeycomb base material, the use of a so-called medium-density honeycomb having 200 cells/square inch, or a so-called high-density honeycomb having 1000 cells/square inch, is preferable.

Among the aforementioned honeycomb base materials, it is most preferable to use a base material in which the cell walls have porosity of 40-75% and D50 pore diameter of 10-50 $\mu$m. The porosity of the cell walls referred to here indicates the porosity as measured by the mercury intrusion method using a mercury porosimeter, while the D50 pore diameter refers to the pore diameter when the total accumulation in the pore diameter distribution measured by a method using a mercury porosimeter becomes 50%.

In addition, it is preferable that the pores present in the cell walls of the honeycomb base material are substantially non-through holes. Substantially non-through holes means that, among the pores observed in a cross-section of a cell wall in the direction perpendicular to the direction of flow of exhaust gas, at least 70% of the pores, and preferably at least 90% of the pores, do not pass through the cell walls. Whether or not pores pass through the cell walls can be determined by impregnating epoxy resin into the cell walls, allowing the resin to cure, and then determining whether or not the pores pass through the cell walls by determining whether or not the epoxy resin is passing through the cell walls by observing a cross-section with a scanning electron microscope.

A ceramic honeycomb base material having non-through holes in this manner can be produced by, for example, extrusion molding a ceramic raw material blend containing a material that dissipates (dissipating material) under the firing conditions of the ceramics followed by drying and firing. The porosity and D50 pore diameter of the cell walls of the resulting honeycomb base material can be controlled by adjusting the added amount and particle size of the dissipating material.

Examples of this dissipating material include graphite particles and carbon black chopped carbon fiber, and materials for which particle size and length have been adjusted can be acquired comparatively easily. A honeycomb base material in which the cells walls have substantially non-through holes can be obtained by preparing a ceramic raw material blend containing graphite particles or carbon black having a comparatively narrow particle size distribution, and a dispersant for preventing aggregation as necessary, and extrusion molding into a honeycomb shape as previously described followed by drying and firing. In addition, a honeycomb base material having linear, non-through holes in its cell walls can also be obtained by using a ceramic raw material blend containing chopped carbon fibers shorter than the thickness of the cell walls of the honeycomb base material and molding in the same manner followed by drying and firing.

One type or more selected from metal oxides such as alumina ($Al_2O_3$), zirconia ($ZrO_2$) and ceria ($CeO_2$), and compounded metal oxides such as zirconia-ceria, alumina-ceria-zirconia, ceria-zirconia-yttria and zirconia-calcia are preferably used for the metal oxide coated onto the pore inner surfaces of the porous catalyst base material.

The exhaust gas purification catalyst support of the present invention has the aforementioned catalyst support in the form of a metal oxide coated onto the pore inner surfaces of a porous catalyst base material such as the aforementioned cordierite honeycomb base material. Instead of the previously disclosed method that uses a slurry in which a metal oxide powder is dispersed, a method is used for coating the metal oxide in which a solution or slurry of a material serving as the metal oxide raw material is impregnated into the pores of a catalyst base material followed by synthesizing metal oxide inside those pores to form a metal oxide coating layer on the pore inner surfaces, namely a metal oxide support layer. The following three methods are preferably used for forming the metal oxide support layer.

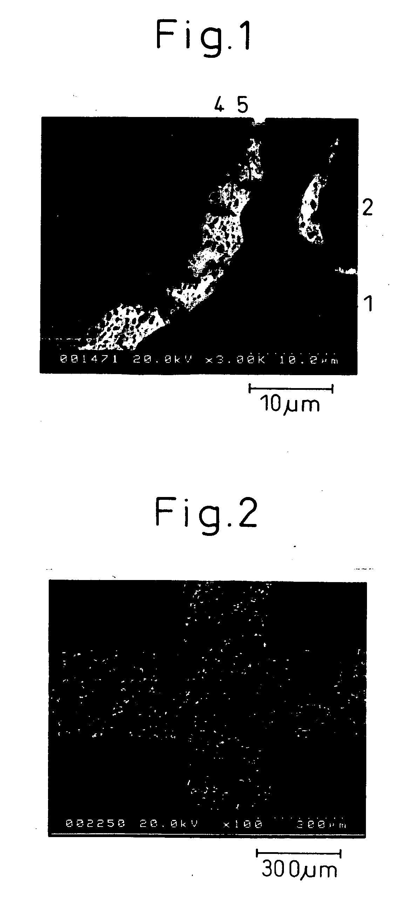

In the first method, by first impregnating a solution of an acidic metal salt into the pores of a porous catalyst base material followed by reacting with an alkaline solution, the metal salt becomes a metal hydroxide, and is precipitated or co-precipitated within the pores. By drying this precipitated or co-precipitated metal hydroxide followed by heating and firing, a metal oxide support layer is formed on the pore inner surfaces of the porous catalyst base material. One type or more of the group consisting of cerium nitrate, zirconium nitrate, yttrium nitrate and aluminum nitrate are preferably used for the acidic metal salt used in this method. In addition, a solution or slurry in which a material such as a metal oxide sol such as a zirconia sol is mixed with these acidic metal salts can also be used. In this method, although an alkaline solution is used that is capable of causing a precipitation or co-precipitation reaction in the form of a metal hydroxide and so forth by reacting with the solution of acidic metal salt, preferable examples of this alkaline solution include aqueous ammonia and aqueous sodium hydroxide. In the case of reacting the acidic metal salt impregnated within the pores of the porous catalyst support with alkaline solution, when forming an oxide containing two or more types of metals as in the manner of a co-precipitation reaction between a solution containing, for example, cerium and zirconia sol, with an alkaline solution, if co-precipitation is induced under conditions of applying ultrasonic vibrations, since a homogeneous compound metal oxide coating layer can be formed on the pore inner surfaces of the porous catalyst base material without the occurrence of phase separation by the respective metal oxides, it is preferable to carry out the co-precipitation reaction by applying ultrasonic vibrations. When a porous catalyst base material impregnated with a solution containing cerium nitrate and zirconia sol has been co-precipitated by immersing in 1 M aqueous ammonia, a metal oxide coating layer produced without applying ultrasonic vibrations prevented the obtaining of a homogeneous metal oxide layer due to the occurrence of phase separation by the ceria and zirconia. An electron micrograph of a cross-section of the metal oxide coating layer at that time is shown in Fig. 1. In contrast, a metal oxide layer synthesized under conditions in which ultrasonic vibrations were applied was homogeneous (not shown). However, depending on the material used, in cases in which a homogeneous metal oxide coating layer is formed within the pores of a porous catalyst base material without being irradiated with ultrasonic waves, irradiation with ultrasonic waves is not necessarily required. Here, the term "homogeneous" refers to nearly the complete absence of pores blocked by metal oxide and locations inside the pores that are not coated by metal oxide due to the pores being blocked in a porous catalyst base material coated with metal oxide. In addition, even if the aforementioned acidic metal salt contains only one type of metal, by carrying out the reaction between acidic metal salt and alkaline solution under conditions in which ultrasonic vibrations are applied, the precipitation reaction can be carried out uniformly within the pores of the catalyst support base material, thereby making this preferable since it allows the formation of a homogenous metal oxide support layer.

In providing an even more detailed explanation of the aforementioned method, for example, a porous catalyst base material is immersed in an acidic metal salt solution or slurry to impregnate the acidic metal salt solution or slurry into the pores of the catalyst base material. A catalyst base material from which excess solution or slurry has been removed is additionally immersed in aqueous ammonia preferably while applying ultrasonic vibrations, thereby causing a precipitation or co-precipitation reaction in the form of metal hydroxide and so forth. Although the precipitated or co- precipitated metal hydroxide resulting from this reaction is then fired after drying, drying is preferably carried out for 1 hour at 120°C, and firing is preferably carried out for 1 hour at 400°C. As a result of this firing, a metal oxide support layer is formed that is coated onto the inner surfaces of the pores of the catalyst base material.

In the present invention, mesh-like cracks are caused to form in the surface of this metal oxide support layer. The formation of these mesh-like cracks is achieved by regulating the solid portion concentration in the aforementioned acidic metal salt solution or slurry to the optimum value. Namely, in the reaction that forms the aforementioned metal oxide support layer, if the solid portion concentration in the acidic metal salt solution or slurry is too high, the metal oxide support layer formed on the inner surfaces of the pores of the porous catalyst base material becomes too fine, thereby preventing mesh-like cracks from adequately entering the surface of the metal oxide support layer and impairing the distribution and diffusion of exhaust gas, which is undesirable. On the other hand, if the solid portion concentration in the aforementioned acidic metal salt solution is too low, this solution impregnates into the pores of the porous catalyst base material, and in the case of additionally drying and firing, instead of the mesh-like cracks formed in the metal oxide support layer becoming deep and large, since the adhesive force of the metal oxide support layer to the catalyst base material is extremely weak, there is the disadvantage of the metal oxide support layer easily separating from the porous catalyst base material. Namely, in order to form mesh-like cracks in a preferable state in the surface of the metal oxide support layer, the solid portion concentration of the acidic metal salt solution or slurry used in the aforementioned method is preferably 10-40 wt%, and particularly preferably 20-30 wt%. According to the method of the present invention, although the width, interval (crack fineness) and depth of the mesh-like cracks in the metal oxide support layer vary according to the conditions under which this support layer is formed and particularly according to the solid portion concentration of the acidic metal salt solution or slurry used, by observing the cracks by, for example, viewing a cross-section of the metal oxide support layer of the present invention, the width of the cracks as measured by observation of that cross-section is typically made to be about 1-3 µm, while the maximum depth of the cracks is made to be the thickness of the metal oxide support layer. Although the interval of the mesh-like cracks of the metal oxide support layer of the present invention as measured by observing a cross-section of the metal oxide support layer is preferably 5-20 µm, it is particularly preferably 5-10 µm since gas diffusion (penetration) is then satisfactory.

In a second method for forming a metal oxide support layer on the inner surfaces of the pores, a sol solution in which a metal alkoxide is hydrolyzed and condensed is impregnated into the pores of a porous catalyst base material. After removing the excess sol solution adhered to the porous catalyst base material, the sol solution impregnated into the pores is additionally dried followed by heating and firing to carry out a dehydration reaction and form a metal oxide support layer on the inner surfaces of the pores of the porous catalyst base material. A metal alkoxide capable of composing a desired metal oxide can be arbitrarily selected and used for the metal alkoxide used in this method. Specific examples of metal alkoxides that can be used include Si, Al and Zr alkoxides. The formation of the sol by hydrolysis and condensation of the metal alkoxide, and the formation of metal oxide by firing this sol employ a so-called sol gel method that is known among persons with ordinary skill in the art, and known technologies can be arbitrarily used for that purpose. In addition, in the present method as well, similar to the aforementioned first method, in the case of impregnating the aforementioned sol solution into the pores of a catalyst base material, as impregnation of the sol solution into the pores is facilitated by applying ultrasonic vibrations to the sol solution, the effect is obtained of a homogeneous metal oxide support layer being formed on the inner surfaces of the pores. The conditions for drying and firing the sol solution impregnated into the pores of the catalyst base material preferably consist of, for example, drying at 100-150°C and firing at 300-400°C in an air atmosphere. In the present method as well, similar to the aforementioned first method, in order to form mesh-like cracks in the surface of the metal oxide support layer and prevent separation of the metal oxide support layer, a sol solution is used particularly preferably that has a solid portion concentration of 10-40 wt%.

A third method for forming a metal oxide support layer on the inner surfaces of the pores of a porous catalyst base material consists of impregnating a mixture of an acidic metal salt solution and a sol solution serving as the raw material of a metal oxide into the pores of a porous catalyst base material, and after removing the excess mixture from the porous catalyst base material, heating and firing the base material to remove the water and form a metal oxide support layer. One type or more selected from the group consisting of cerium nitrate, zirconium nitrate, yttrium nitrate and aluminum nitrate are preferably used for the acidic metal salt used in the present method. In addition to a sol solution prepared by hydrolyzing and condensing a metal alkoxide, various types of commercially available sol solutions can also be used for the sol solution used in the present method. Examples of commercially available sol solutions include Needral manufactured by Taki Chemical and Aluminasol AC200 manufactured by Nissan Chemical Industries.

In this third method as well, the mixture of acidic metal salt solution and sol solution is more easily impregnated into the pores of the porous catalyst base material when it is impregnated while applying ultrasonic vibrations, while also offering the effect of being able to form a homogeneous metal oxide support layer in the pores of the porous catalyst base material. Drying and firing after impregnating the mixture of acidic metal salt solution and sol solution into the pores of the catalyst base material preferably consist of, for example, drying at 100-150°C and firing at 300-400°C in an air atmosphere. In this third method as well, although a sol solution having a solid portion concentration of 10-40 wt% is used for the same reasons as in the aforementioned first and second methods, this is particularly preferable since mesh-like cracks are formed in the surface of the metal oxide support layer.

Next, an explanation is provided of an exhaust gas purification catalyst support and its production method, in which the metal oxide support layer coated onto the inner surfaces of the pores of a porous catalyst base material has fine pores, and the average pore diameter is controlled to 10 nm or more. This exhaust gas purification catalyst support in which the average pore diameter of the metal oxide support layer is controlled to 10 nm or more can be produced by impregnating the aforementioned solution or slurry, containing a metal salt and so forth to serve as the raw material for synthesizing metal oxide, into the pores of a porous catalyst base material, and in a met in which metal oxide is synthesized within the pores, and a solution or slurry obtained by adding one type of more selected from the group consisting of polymer, which is soluble in this solution or slurry containing a metal salt and so forth, polymer powder and surfactant (to be simply referred to as "polymer"), is impregnated into the pores of an exhaust gas purification catalyst base material followed by heating when forming the metal oxide support layer within the pores. Namely, together with a metal oxide being synthesized by firing, as a result of the polymer contained in the raw material of the metal oxide being removed by volatilization or decomposition, they act as pore forming agents, thereby allowing the formation of fine pores having an average pore diameter of 10 nm or more in the metal oxide support layer.

Namely, fine pores having an average pore diameter of 10 nm or more can be formed in a metal oxide support layer by (1) a method in which, after impregnating a solution or slurry obtained by adding one or more types of materials selected from the group consisting of polymer, which is soluble in a solution of acidic metal salt, polymer powder and surfactant, to that solution, into the pores of a porous catalyst base material, it is reacted with an alkaline solution followed by firing to form a metal oxide support layer on the inner surfaces of the pores of porous catalyst base material, (2) a method which a solution obtained by further adding one or more types selected from the group consisting of polymer, which is soluble in a sol solution obtained by hydrolyzing and partially condensing a metal alkoxide, polymer powder and surfactant, to that sol solution, is impregnated into the pores of the aforementioned porous catalyst base material followed by firing to form a metal oxide support layer on the inner surfaces of the pores of the porous catalyst base material, and (3) a method in which a mixed solution obtained by adding one or more types selected from the group consisting of polymer, which is soluble in a mixed solution of an acidic metal salt solution and a sol solution obtained by hydrolyzing and partially condensing a metal alkoxide, polymer powder and surfactant, to that mixed solution, is impregnated into the pores of a porous catalyst base material followed by firing to obtain a metal oxide support layer on the inner surfaces of the pores of the porous catalyst base material. Furthermore, the aforementioned average particle diameter is the value measured by a mercury porosimeter. In the present specification, a polymer refers to a polymer having a weight average molecular weight as polystyrene of 1000 or more as measured by gel permeation chromatography (GPC). In addition, when the molecular weight of a polymer is referred to, it refers to the weight average molecular weight as polystyrene.

Any materials may be used for the soluble polymer, the polymer powder and the surfactant used in the aforementioned methods provided they form fine pores having an average pore diameter of 10 nm or more in a metal oxide support layer. Although the following lists some specific examples, the present invention is not limited to these examples. One type or more of polyethylene oxide having a molecular weight of 5000-10000 and polyvinyl alcohol having a molecular weight of 5000-10000 are preferably used for the soluble polymer used in the aforementioned methods, and polyvinyl alcohol is particularly preferable due to its satisfactory dispersivity in water. Polyethylene powder having an average particle diameter of 0.1-10 $\mu$m, for example, is preferably used as for the polymer powder. In addition, one or more types selected from various types of known anionic, cationic, amphoteric and nonionic surfactants can be used for the surfactant. Examples of nonionic surfactants include aliphatic soaps, N-acylamino acids and their salts, carboxylates such as polyoxyethylene alkyl ether carboxylates and acylated peptides, sulfonates such as alkylbenzene sulfonates, alkylnaphthalene sulfonates, salt formalin condensation products of naphthalene sulfonate, salt formalin condensation products of melamine sulfonate, dialkylsulfosuccinate ester salts, sulfosuccinate alkyl disalts, polyoxyethylene alkylsulfosuccinate disalts, alkylsulfoacetates, $\alpha$-olefin sulfonates, N-acyl-N-methyltaurate and sodium dimethyl-5-sulfoisophthalate, sulfate esters such as higher alcohol sulfate esters, secondary higher alcohol sulfate esters, polyoxyethylene alkyl ether sulfates, secondary higher alcohol ethoxysulfates, polyoxyethylene alkylphenyl ether sulfates, monoglysulfates and sulfate esters of fatty acid alkyloylamides, and phosphate esters such as polyoxyethylene alkyl ether phosphates, polyoxyethylene alkylphenyl ether phosphates and alkyl phosphates. Examples of the aforementioned cationic surfactants include aliphatic amine salts, aliphatic quaternary ammonium salts, benzalkonium chloride salts, benzetonium chloride, pyridinium salts and imidazolinium salts. Specific examples of cationic surfactants include Ermac C, Ermac HT and Ermac T50 (trade names) manufactured by Lion Corporation. Examples of the aforementioned amphoteric surfactants include carboxybetaine types, aminocarboxylates, imidazolinium betaine, lecithin and alkylamine oxides. Examples of nonionic surfactants include ether types such as polyoxyethylene alkyl ethers, polyoxyethylene alkylphenyl ethers, polyoxyethylene sterol ethers, polyoxyethylene lanolin derivatives, ethylene oxide derivatives of alkylphenol formalin condensation products, polyoxyethylene-polyoxypropylene block copolymers and polyoxyethylene-polyoxypropylene alkyl ethers, ester ether types such as polyoxyethylene glycerin fatty acid esters, polyoxyethylene castor oil and hardened castor oil, polyoxyethylene sorbitan fatty acid esters, polyoxyethylene sorbitol fatty acid esters and polyoxyethylene fatty acid alkanol amide sulfates, ester types such as (poly)ethylene glycol fatty acid esters, (poly) glycerin fatty acid esters, sorbitan fatty acid esters, propylene glycol fatty acid esters and sucrose fatty acid esters, and nitrogen-containing surfactants such as fatty acid alkanol amides, polyoxyethylene fatty acid amides and polyoxyethylene alkyl amines.

One or more types of materials selected from the group consisting of the aforementioned soluble polymer, polymer powder and surfactant (to simply be referred to as "polymer") is preferably added at 0.1-5 parts by weight with respect to 100 parts by weight of the aforementioned acidic metal salt solution, sol solution obtained by hydrolyzing and partially condensing a metal alkoxide, or mixed liquid of acidic metal salt solution and the aforementioned sol solution. This is because if the added amount of polymer is less than 0.1 parts by weight, fine pores are not adequately formed in the resulting metal oxide support layer, while if the added amount exceeds 5 parts by weight, the strength of the resulting metal oxide support layer decreases.

Moreover, as the raw material solution can be uniformly and completely impregnated into the pores, it is preferable to impregnate the aforementioned raw material solution of the metal oxide support layer containing polymer into the pores of the porous catalyst base material while applying ultrasonic vibrations.

Next, formation of the metal oxide support layer by firing is preferably carried out as described below. Namely, the temperature is first raised to no higher than 200°, the coating layer of metal oxide on the inner surfaces of the pores of the porous catalyst base material is dried, after which the heating temperature is raised from 200°C to about 700°C to perform firing and remove the polymer.

Since a metal oxide support layer formed by this method has fine pores, enabling exhaust gas to be easily and diffused within the metal oxide support layer, it is preferable as a support for an exhaust gas purification catalyst.

In addition to fine pores being formed in the metal oxide support layer by the aforementioned method, depending on conditions such as the metal oxide raw material solution used or the solid portion concentration of the slurry, there are also cases in which mesh-like cracks can be formed in the surface of the metal oxide support layer. Although the aforementioned solution or slurry serving as the metal oxide raw material to be impregnated into the pores of the porous catalyst base material preferably has a solid portion concentration of 10-40 wt% in order to form mesh-like cracks in the surface of the metal oxide support layer, this is because, if the solid portion concentration exceeds 40 wt%, it becomes difficult to form mesh-like cracks in the surface of the metal oxide support layer, while if the solid portion concentration is less than 10 wt%, the metal oxide support layer itself separates easily.

As an exhaust gas purification catalyst obtained by loading a metal having the ability to purify exhaust gas onto the aforementioned exhaust gas purification catalyst support having a metal oxide support layer in which fine pores having an average pore diameter of 10 nm or more are formed has a superior ability to purify exhaust gas since exhaust gas is easily distributed and diffused, and has superior heat insulating properties since the metal oxide support layer is porous, catalytic activity is high in the case the exhaust gas is at a comparatively low temperature, while also having the effect of catalytic activity being manifested easily as a result of the catalyst being easily warmed when exhaust gas initially starts to be distributed through the catalyst, or in other words, having a superior catalyst warming characteristic.

An exhaust gas purification catalyst is obtained by additionally loading a metal having an exhaust gas purification function onto each of the aforementioned supports for an exhaust gas purification catalyst of the present invention. Metals belonging to groups 3A to 7A of the periodic table, group 8A including precious metals, group 1B and transition metals including f-block elements are preferably used as loaded metals, and more specifically, metals such as manganese (Mn), iron (Fe), cobalt (Co), nickel (Ni), copper (Cu), yttrium (Y), zirconium (Zr), niobium (Nb), molybdenum (Mo), hafnium (Hf), tantalum (Ta), tungsten (W), lanthanum (La), cerium (Ce), praseodymium (Pr) and neodymium (Nd), as well as precious metals such as platinum (Pt), gold (Au), palladium (Pd), ruthenium (Ru) and rhodium (Rh) are used preferably, while one or more types of metals selected from the group consisting of Mn, Fe, Co, Ni, Cu, Pt, Au, Pd, Ru and Rh are used particularly preferably.

Loading of the aforementioned metals onto the metal oxide support layer of an exhaust gas purification catalyst support can be carried out by arbitrarily selecting and using a known method for the method for loading a metal onto a metal oxide. Examples of such methods include, but are not limited to, a method that consists of absorbing and loading a metal salt solution of the metal to be loaded onto a metal oxide support layer followed by drying and firing. In addition, loading of a metal onto a metal oxide support layer can be carried out by preliminarily forming a metal oxide support layer on the inner surfaces of the pores of a porous catalyst base material, followed by loading the metal by absorbing and loading onto this metal oxide support layer using an aqueous metal salt solution. In addition, a metal oxide support layer can be formed and a metal can be loaded onto that support layer by impregnating a solution or slurry of an acidic metal salt to serve as the raw material of the metal oxide for forming the aforementioned metal oxide support layer, a sol solution obtained by hydrolyzing and partially condensing a metal alkoxide, or a mixed liquid of an acidic metal salt solution and the aforementioned sol solution, along with a liquid in which the metal salt to be loaded, into the pores of a porous catalyst base material followed by firing. This method is preferable as the production process of the exhaust gas catalyst can be shortened.

In the case of a method for forming a metal oxide support layer on the inner surfaces of the pores of a porous catalyst base material in the present invention, in addition to being able to form a homogeneous coating layer of metal oxide on the inner surfaces of the pores without blocking the pores as previously described, in comparison with a method of the prior art in which a slurry containing a powder obtaining by crushing a metal oxide is impregnated onto the inner surfaces of the pores of a porous catalyst base material followed by drying and firing, as a step of crushing the pre-synthesized metal oxide to prepare a powder is no longer required, the process itself can be simplified. In addition, the method of the present invention, in addition to being able to use a sol and metal sulfate of a metal oxide raw material, is also able to use various raw materials such as sols, acetates and other metal salts, thereby having a larger degree of freedom in selecting the raw material as compared with the case of using a powder obtained by crushing a pre-synthesized metal oxide.

Moreover, when the aforementioned method is used for forming a metal oxide support layer of the present invention, it was determined that a large number of fine pores having a diameter of several tens of nanometers are present among the fine pores in the metal oxide support layer formed on the inner surfaces of the pores of a porous catalyst base material regardless of whether or not a polymer is contained in the metal oxide synthesis raw material solution or slurry impregnated into the pores of the porous catalyst base material. In contrast, the pore diameter of a metal oxide support layer, formed by impregnating a slurry containing a powder prepared by crushing a metal oxide into the pores of a porous catalyst base material followed by drying and firing, is nearly always several nanometers or less, and there are hardly any fine pores having a pore diameter of several tens of nanometers. This is thought to be because fine pores having a large diameter are susceptible to breakage during crushing of the metal oxide. As a large number of fine pores having a diameter of several tens of nanometers are present in the metal oxide support layer formed in the method of the present invention, the ease of diffusion of exhaust gas into the metal oxide support layer is also considered to be a reason why the exhaust gas purification catalyst in which a metal is loaded onto the exhaust gas purification catalyst support of the present invention has a superior ability to purify exhaust gas. Furthermore, measurement of the diameter of fine pores of the metal oxide support layer can be carried out by observing with an electron microscope.

The following provides a further explanation of the exhaust gas purification catalyst support of the present invention based on the examples.

Examples

[Preparation of Catalyst Base Material]

Kaolin (350 g), talc (300 g) and alumina (100 g) powders each having a particle diameter of 1 $\mu$m or less are mixed so as to form a cordierite composition after firing, and after mixing and crushing for 12 hours with a ball mill, binder (30 g of methyl cellulose) and pore former in the form of graphite particles (particle diameter: 50-300 $\mu$m, 10 g) were added followed by kneading. This mixture was then extruded and fired at 1450°C to obtain a honeycomb-shaped catalyst base material measuring 80 mm in diameter by 95 mm in length (volume: 478 cc), having a wall thickness of 200 $\mu$m and having a cell density of 300 cells/square inch. When the pores of the resulting base material were measured using a mercury porosimeter, the porosity was 60% and the average pore diameter of the pores was 30 $\mu$m. This honeycomb-shaped catalyst base material was used in all of the following examples.

[Comparative Example]

200 parts by weight of water were added to 50 parts by weight of ceria-zirconia solid melt particles (molar ratio of Ce/Zr: 1/1, average particle diameter: 20 $\mu$m), followed by mixing and crushing with a ball mill for 50 hours. when the pore diameter of the powder after crushing was measured, the average particle diameter (D50) was 2 $\mu$m, and the 90% particle diameter (D90) was 15 $\mu$m. Aluminasol (AC200, Nissan Chemical Industries) was added to this powder to 3% of the total weight of the powder solid portion, followed by the addition of water so that the solid portion became 30 wt% to prepare a slurry. After immersing the aforementioned honeycomb-shaped catalyst base material in this slurry, excess slurry was blown off with air followed by drying at 400°C. As a result, an exhaust gas purification catalyst support was obtained in which metal oxide having for its primary components ceria-zirconia particles was coated onto the catalyst base material at 80 g per catalyst base material (160 g per 1 liter of catalyst volume). Continuing, after immersing the aforementioned catalyst base material coated with metal oxide in a solution containing Pt and Rh prepared by dissolving platinum dinitrocyanamine and rhodium nitrate in water and adjusting the concentration so that the Pt/Rh ratio was 1.5/0.3 (g/L of solution), it was dried at 400°C to obtain an exhaust gas purification catalyst (I) loaded with Pt and Rh.

[Example 1]

40 parts by weight of zirconium oxynitrate were added to 200 parts by weight of ceriasol (Needral (trade name), Taki Chemical, solid portion: 15%) followed by stirring for 10 minutes at room temperature to completely dissolve and prepare a slurry. When the solid portion of the slurry was measured with a moisture meter, it was found to be 25 wt%. The aforementioned honeycomb-shaped catalyst base material was immersed in this slurry to impregnate the slurry into the pores of the catalyst. Subsequently, excess slurry was blown off with air followed by drying by holding in an electric furnace at 120°C for 1 hour. The aforementioned catalyst base material was immersed in the slurry until the solid portion of the slurry reached 80 g per catalyst base material (160 g per 1 liter of catalyst volume) followed by removal of excess slurry and repeated drying. Subsequently, the base material was fired by holding in an electric furnace at 700°C for 5 hours to obtain an exhaust gas purification catalyst support.

The catalyst base material was then immersed in a chemical solution in which the concentrations of Pt and Rh were 1.5/0.3 (g/L of solution) in the same manner as the aforementioned comparative example followed by drying to obtain an exhaust gas purification catalyst (II) in which Pt and Rh were loaded on this exhaust gas purification catalyst support.

[Example 2]

73 parts by weight of cerium nitrate were added to 100 parts by weight of zirconasol (solid portion: 20 wt%, Daiichi Rare Elements) followed by stirring for 10 minutes at room temperature to completely dissolve and obtain a slurry. This slurry was allowed to penetrate into the aforementioned honeycomb-shaped catalyst base material, after which excess slurry was blown off with air. Immediately thereafter, the honeycomb-shaped catalyst base material was immersed in 1 M aqueous ammonia into which a vibration terminal was inserted for irradiation with ultrasonic waves, and metal salt was co-precipitated within the pores of the catalyst base material under conditions of applying ultrasonic vibrations. Subsequently, the catalyst base material was dried by holding for 1 hour in an electric furnace at 120°C. Immersion in the aforementioned slurry, co-precipitation and drying were repeated until the amount of solid portion coated onto the catalyst base material became 80 g per catalyst (160 g per liter of catalyst volume). Next, the coated catalyst base material was fired for 5 hours in an electric furnace at 700°C to obtain an exhaust gas purification catalyst support. This exhaust gas purification catalyst support was then immersed in a chemical solution containing Pt and Rh in which the concentrations of Pt and Rh were adjusted to 1.5/0.3 (g/L of solution) as described in the aforementioned example followed by drying to obtain an exhaust gas purification catalyst (III) in which Pt and Rh were loaded on this exhaust gas purification catalyst support.

[Example 3]

An exhaust gas purification catalyst (IV) loaded with Pt and Rh was obtained in compliance with the method described in Example 2. However, a slurry obtained by mixing 10 parts by weight of aluminum nitrate, 10 parts by weight of tetraethoxysilane, 50 parts by weight of water and 10 parts by weight of dilute sulfuric acid followed by aging for 24 hours at 60°C in a sealed container was used instead of the slurry prepared from 100 parts by weight of zirconasol (solid portion: 20 wt%, Daiichi Rare Elements) and 73 parts by weight of cerium nitrate used in Example 2.

[Example 4]

40 parts by weight of zirconium oxynitrate were added to 200 parts by weight of ceriasol (Needral (trade name), Taki Chemical, solid portion: 15%) followed by stirring for 10 minutes at room temperature to completely dissolve and prepare a slurry in the same manner as Example 1. 10 parts by weight of an aqueous solution of polyvinyl alcohol (PVA, Kishida Chemical) having a solid portion concentration of 15% were added and to and mixed with 100 parts by weight of this slurry to obtain a PVA-containing slurry.
An exhaust gas purification catalyst (V) loaded with Pt and Rh was obtained in compliance with the method described in Example 1. However, the aforementioned PVA-containing slurry was used instead of the slurry prepared from 40 parts by weight of zirconium oxynitrate and 200 parts by weight of ceriasol used in Example 1. The average pore diameter of the exhaust gas purification catalyst support obtained by this method was 30 nm as measured with a mercury porosimeter.

[Example 5]

40 parts by weight of zirconium oxynitrate were added to 200 parts by weight of ceriasol (Needral (trade name), Taki Chemical, solid portion: 15%) followed by stirring for 10 minutes at room temperature to completely dissolve and prepare a slurry in the same manner as Example 1. 10 parts by weight of an aqueous solution of polyethyleneoxide (PEO, Kishida Chemical, molecular weight: 5000) having a solid portion concentration of 15% were added to and mixed into 100 parts by weight of this slurry to obtain a PEO-containing slurry.
A catalyst (VI) loaded with Pt and Rh was obtained in compliance with the method described in Example 1. However, the aforementioned PEO-containing slurry was used instead of the slurry prepared from 40 parts by weight of zirconium oxynitrate and 200 parts by weight of ceriasol used in Example 1. The average pore diameter of the exhaust gas purification catalyst support obtained by this method was 30 nm as measured with a mercury porosimeter.

[Example 6]

40 parts by weight of zirconium oxynitrate were added to 200 parts by weight of ceriasol (Needral (trade name), Taki Chemical, solid portion: 15%) followed by stirring for 10 minutes at room temperature to completely dissolve and prepare a slurry in the same manner as Example 1. 1.5 parts by weight polyethylene particles having an average particle diameter of 1 $\mu$m were added to and mixed into 100 parts by weight of this slurry to obtain a polyethylene particle-containing slurry.
A catalyst (VII) loaded with Pt and Rh was obtained in compliance with the method described in Example 1.

However, the aforementioned polyethylene particle-containing slurry was used instead of the slurry prepared from 40 parts by weight of zirconium oxynitrate and 200 parts by weight of ceriasol used in Example 1. The average pore diameter of the exhaust gas purification catalyst support obtained by this method was 150 nm as measured with a mercury porosimeter.

[Status of Metal Oxide Support Layer Coated in Pores of Porous Catalyst Base Material]

A cross-sectional photograph of the resulting catalyst (I) is shown in Fig. 2. Although nearly 100% of the metal oxide support was contained in the pores within the walls of the honeycomb-shaped catalyst base material, some of the pores were completely blocked by the metal oxide support, while on the other hand, there were also pores present that were not coated with the metal oxide support layer.

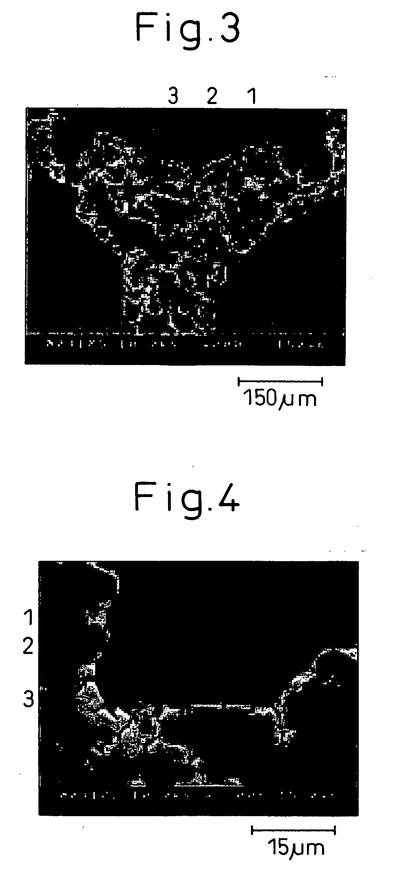

A cross-sectional photograph of the resulting catalyst (II) is shown in Fig. 3, and its partially enlarged cross-sectional photograph is shown in Fig. 4. Based on Figs. 3 and 4, it can be seen that the metal oxide support layer is formed at a nearly uniform thickness on the inner surfaces of the pores of the catalyst base material, that hardly any of the pores of the catalyst base material are blocked, and that the surface of the metal oxide support layer contains cracks.

[Evaluation of Exhaust Gas Purification Performance]

Exhaust gas purification performance was evaluated as described below using exhaust gas purification catalysts (I), (II) and (IV) prepared in the aforementioned Comparative Example 1, Example 1 and Example 4.

Each of the aforementioned exhaust gas purification catalysts was connected to a 2 liter gasoline engine so as to allow exhaust gas discharged from the engine to pass through it, and after adjusting the temperature of the exhaust gas entering the catalyst (incoming gas temperature) to 850°C, the aforementioned gasoline engine was continuously run for 50 hours to accelerate deterioration of the exhaust gas purification catalysts by allowing exhaust gas to pass through the exhaust gas purification catalysts for 50 hours.

Low-temperature activity and warming (ignitability) were evaluated in the manner described below using these accelerated deterioration exhaust gas purification catalysts.

<Evaluation of Low-Temperature Activity]

A test piece measuring 30 mm in diameter and 50 mm in length was cut out of the aforementioned accelerated deterioration exhaust gas purification catalysts, and the model exhaust gas indicated below was allowed to pass through the test piece while raising the temperature from room temperature at the rate of 10°C/minute followed by measuring the purification rate of $C_3H_6$ contained in the discharged model exhaust gas. The amount of $C_3H_6$ contained in the model exhaust gas was measured by gas chromatography.

(Model Gas Composition: Total 100%)

CO (0.16%) + $C_3H_6$ (2400 ppm) + NO (1000 ppm) + $CO_2$ (14.5%) + $O_2$ (0.57%) + $H_2O$ (10%) + $N_2$ (remainder)

The purification rate was calculated using the following formula:

$$\text{Purification rate (\%)} = (\text{initial amount of } C_3H_6 \text{ in}$$

$$\text{model exhaust gas - amount of } C_3H_6 \text{ in exhaust gas}$$

$$\text{discharged after passing through catalyst})/(\text{initial}$$

$$\text{amount of } C_3H_6 \text{ in model exhaust gas}) \times 100$$

The temperature at which the value of this purification rate reached 50% is shown in Table 1 as the 50% purification temperature. The lower the 50% purification temperature, the better the catalytic activity at low temperatures, and the better the catalyst as an exhaust gas purification catalyst.

<Evaluation of Warming (Ignitability)>

The aforementioned accelerated deterioration catalysts (I), (II) and (V) were used in their original size of 80 mm in diameter x 90 mm in length. An apparatus was fabricated that allowed pre-heated model gas to pass through a bypass or the catalyst by switching a valve. The model gas was first allowed to pass through the bypass after heating to 400°C. On the other hand, the catalyst was held at room temperature. Next, the valve was switched to allow the 400°C model gas to pass through the catalyst followed by measurement of the amount of time required for the purification rate of $C_3H_6$ contained in the model gas that passed through the catalyst to reach 50%. The results obtained are shown in Table 1 as the 50% purification attainment times.

Table 1

| | Results of evaluation of low-temperature activity (50% purification temperature) | Evaluation of warming (ignitability) (50% purification rate attainment time) |
|---|---|---|
| Comparative Example Catalyst (I) | 280°C | 25 seconds |
| Example Catalyst (II) | 250°C | 18 seconds |
| Example Catalyst (V) | 255°C | 16 seconds |

According to the results shown in Table 1, catalyst (II) and (V) produced using the exhaust gas purification catalyst support of the present invention exhibited lower 50% purification temperatures than catalyst (I) of the comparative example, and exhibited shorter 50% purification rate attainment times than catalyst (I), thereby demonstrating that they have superior exhaust gas purification performance. The reason for catalyst (V) having the shortest 50% purification rate attainment time, or in other words, the best catalyst warming, is believed to be that, as the metal oxide support layer has a large number of fine pores, the support layer has a high level of heat insulating properties, thereby enabling the temperature of the catalyst to rise rapidly.

The exhaust gas purification catalyst support having mesh-like cracks in the surface of the metal oxide support layer provided by the present invention has superior exhaust gas ventilation and diffusivity. In addition, the exhaust gas purification catalyst support having a porous metal oxide support layer containing fine pores having an average pore diameter of 10 nm or more offers the effects of satisfactory exhaust gas diffusion and superior heat insulating properties due to the presence of cracks in the surface of the metal oxide support layer and/or fine pores present in that support layer having a large average pore diameter. Moreover, according to the production method of an exhaust gas purification catalyst support provided in the present invention, as an exhaust gas purification catalyst support can be produced in which a metal oxide support layer is formed on the inner surfaces of the pores of a porous catalyst base material without blocking those pores with the metal oxide support, exhaust gas easily diffuses into this support and the contact area between the exhaust gas and exhaust purification catalyst support can be increased. Thus, an exhaust gas purification catalyst obtained by loading a metal having the function of purifying exhaust gas onto these exhaust gas purification catalyst supports demonstrates the effect of having superior exhaust gas purification performance.

In addition, the method of the present invention also offers the advantage of being able to simplify the production process in comparison with a method for producing an exhaust gas purification catalyst support of the prior art that is produced by impregnating a slurry containing a metal oxide powder into the pores of a porous catalyst base material.

A metal oxide is synthesized in the pores of a porous catalyst base material by impregnating a raw material solution for synthesis of that metal oxide into those pores. At that time, mesh-like cracks are formed in the metal oxide support layer coated onto the inner surfaces of the pores by adjusting the solid portion concentration in the raw material solution for synthesizing the metal oxide to a suitable value. In addition, fine pores are formed in the metal oxide support layer obtained after firing by containing a polymer and so forth in the raw material solution for synthesizing the metal oxide. The presence of these mesh-like cracks and/or fine pores in the metal oxide support layer allow the obtaining of effects such as greater ease of diffusion of exhaust gas into this support layer.

## Claims

1. A support for an exhaust gas purification catalyst comprising: a porous catalyst base material and a metal oxide support layer coated onto the inner surface of the pores of said porous catalyst base material, the surface of said metal oxide support layer having mesh-like cracks.

2. A production method of a support for an exhaust gas purification catalyst according to claim 1 comprising: impregnating a solution of an acidic metal salt inside the pores of the porous catalyst base material followed by reacting with an alkaline solution and firing to form the metal oxide support layer.

3. A production method of a support for an exhaust gas purification catalyst according to claim 1 comprising: impregnating a sol solution, which is obtained by hydrolyzing and partially condensing a metal alkoxide, into the pores of the porous catalyst base material, followed by firing to form the metal oxide support layer.

4. A production method of a support for an exhaust gas purification catalyst according to claim 1 comprising: impregnating a solution of an acidic metal salt and a solution obtained by hydrolyzing and partially condensing a metal alkoxide into the pores of the porous catalyst base material followed by firing to form the metal oxide support layer.

5. A production method according to any of claims 2, 3 or 4 wherein the solution impregnated into the pores of the porous catalyst base material has a solid portion concentration of 10-40 wt%.

6. A support for an exhaust gas purification catalyst comprising: a porous catalyst base material and a metal oxide support layer coated onto the inner surface of the pores of said porous catalyst base material, said metal oxide support layer being a porous layer having an average pore diameter of 10 nm or more.

7. A support for an exhaust gas purification catalyst comprising: a porous catalyst base material and a metal oxide support layer coated onto the inner surface of the pores of said porous catalyst base material, said metal oxide support layer being a porous layer having an average pore diameter of 10 nm or more, and the surface of said metal oxide support layer having mesh-like cracks.

8. A production method of a support for an exhaust gas purification catalyst according to claims 6 or 7 comprising: impregnating a solution of an acidic metal salt, and a solution containing one or more types selected from the group consisting of polymer that dissolves in that solution, polymer powder and surfactant, into the pores of the porous catalyst base material, followed by reacting with an alkaline solution and firing to form the metal oxide support layer.

9. A production method of a support for an exhaust gas purification catalyst according to claims 6 or 7 comprising: impregnating a sol solution obtained by hydrolyzing and partially condensing a metal alkoxide, and a solution containing one or more types selected from the group consisting of polymer that dissolves in that solution, polymer powder and surfactant, into the pores of the porous catalyst base material followed by firing to form the metal oxide support layer.

10. A production method of a support for an exhaust gas purification catalyst according to claims 6 or 7 comprising: impregnating a mixed solution of a solution of an acid metal salt and a sol solution obtained by hydrolyzing and partially condensing a metal alkoxide, and a mixed solution containing one or more types selected from the group consisting of polymer that dissolves in that mixed solution, polymer powder and surfactant, into the pores of the porous catalyst base material followed by firing to form the metal oxide support layer.

11. A production method according to any of claims 8, 9 or 10 wherein, the solution impregnated into the pores of the porous catalyst base material has a solid portion concentration of 10-40 wt%.

# Fig.1

4 5

2

1

001471 20.0kV ×3.00K 10.2μm

$\overline{10\mu m}$

# Fig.2

082258 20.0kV ×100 300μm

$\overline{300\mu m}$

# Fig.3

150μm

# Fig.4

15μm